# EUROPEAN PATENT SPECIFICATION

(11) **EP 2 088 536 B1**
(45) Date of publication and mention of the grant of the patent: **11.08.2021**
(21) Application number: 08151229.5
(22) Date of filing: 08.02.2008
(51) Int. Cl.: G06K 9/22, G06F 3/023

(54) **Text input system and method involving finger-based handwriting recognition and word prediction**
Texteingabesystem und -verfahren mit fingerbasierter Handschrifterkennung und Wörtervorhersage
Système d'entrée de texte et procédé impliquant la reconnaissance de l'écriture basée sur les doigts et la prédiction de mots

(43) Date of publication of application: 12.08.2009
(73) Proprietor: Nokia Technologies Oy, 02610 Espoo (FI)
(72) Inventor: Assadollahi, Ramin O., 80333 München (DE)
(74) Representative: Samson & Partner Patentanwälte mbB

(56) References cited:
- EP-A- 1 480 158
- EP-A- 1 724 692
- US-A- 4 764 972
- US-A- 5 926 566
- US-A1- 2007 230 791
- None

## Description

The present invention relates to a text input system and method involving finger-based handwriting recognition and word prediction.

The recognition of handwritten characters is a task that involves the recognition of a large set of characters that each can have considerable variance in their visual appearance. For instance, the English alphabet includes 26 letters in upper and lower case plus ten digits, characters for punctuation (".","?","!","," etc) and special characters which can sum up to about 60 different characters (in the following, the term "character" is used to describe all sorts of patterns that may refer to letters, digits, punctuation, gestures and the like).

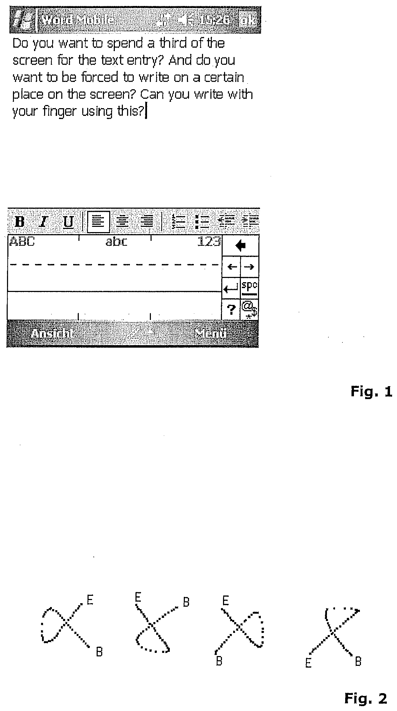

Typically there are problems recognizing very similar characters such as "s", "S" and "5" or "g", "q", "9" and so forth. Many prior art approaches address these complications by introducing different areas on an input field dedicated to one sub-set of characters (e.g. one area for upper case letters, one for lower case letters and one for digits) as shown in Fig. 1. The system knows which character is meant with the input by using the position information for the character: In figure 1, the user has to write on the left area to get an upper case version of the character, on the middle area to get a lower case version and on the right area to get a digit.

From a usability standpoint, it is clearly desirable not to force the user to write in different areas of the input field for getting the intended character as this involves an additional learning process. A second reason for not having dedicated areas is the physical size of the input field when it comes to recognizing characters that are written using the user's finger instead of a stylus. Data collection has shown that users tend to write larger using their fingers as compared to when they write using a stylus. Hence, the solution using different areas for the sub-sets of characters does not work for fingers.

Other prior art solutions force the user to learn writing a dedicated set of characters with specific strokes that can be easily distinguished by pattern recognition software but are not natural. Finally, there are prior art solutions that try to recognize character sequences representing full words by matching these against a dictionary. These systems need strong computing power or perform poorly on mobile devices that have low computing power. Moreover, these systems are also not a viable solution for user writing with fingers as words are getting to large for the screen when written using the finger.

EP 1 724 692 A2 shows a context dependent text input mechanism. To avoid tapping a whole text on a miniature keyboard as provided on miniature computers the possibly next item of text is predicted based on the preceding word or words of text. A list of candidate words is then presented to a user. Instead of selecting a candidate word at once or scrolling through the list of candidate words, the user may enter a character. The system then filters out any candidate words not beginning with the entered character. EP 1 480 158 A1 deals with adaptive handwriting recognition using generic and user-specific classifiers. Generic classification may be based on generic features as scaled shape relevant features. User-specific classification may be trained on a specific user. Based on both classifiers one character is finally output.

Handwriting data (by both stylus and finger) has been collected from several hundred users and analysed. It was found that up to ten different visual forms of a single letter are needed to capture the usual variants of a single letter. Fig. 2 shows different variants for the lower case letter "x". The sequence of the strokes is illustrated by the attached letters: "B" stands for the beginning of the dot sequence and "E" for the end. The variants are shown in decreasing order of frequency of appearance in the collected data set, from left to right: 158, 154, 64, 22.

Given the deficiencies of the prior art, there is a need for a handwriting recognition system where the user does not have to learn a set of artificial or simplified symbols. All or most of the natural forms of writing a character should be represented and recognized.

The present invention is directed at writing single letters and selecting predicted full words and, thereby, freeing the user from being forced to write in different areas, recognition errors and screen size issues. The invention is preferably applied for interfaces that use a finger instead of a stylus for interacting with a device. The invention is further very useful for handheld or mobile devices that do not have a keyboard, such as mobile phones, PDAs, communicators, etc.

Accordingly, a text input device with the features of claim 1 and a text input method with the features of claim 10 is provided.

According to an aspect of the present invention, a word prediction algorithm is provided that can predict the next word of a sentence given the present context. The context can also be the beginning of a sentence in which case words that can start a sentence are predicted. Using the word prediction component, the handwriting character recognition component does not submit only one recognised character (the best match) but a plurality of recognized characters (e.g. two or three, i.e. the second and third best matches) per recorded strokes for an input pattern. For example, the character recogniser can submit "q" and "g" to a filter component and the filter component will filter the current set of candidate words that have either "q" or "g" in the current cursor position. Filtering of candidate words shall mean that candidate words that do not match the one or more recognized characters are omitted or removed from the candidate word list and not further considered, e.g. presented to the user. The user can then select the intended word, e.g. using his finger, or continue to write another character to further constrain the list of candidate words.

An embodiment of the invention comprises a computer with a touch-screen device and implements three software components:
1. Handwriting recognition component;
2. Word prediction component; and
3. User interface component allowing to write letters and select candidate words

These three components interact in a synergetic way. It is important to note, however, that any of the three components may be implemented in a different way without leaving the scope of the invention. In order to generate the strongest synergetic effect, the components have certain features:
The handwriting character recognition component is able to return a set of characters for a recorded pattern.

The word prediction component predicts not only one word but a list of candidates in order to be able to filter this list.

The user interface should be able to show multiple candidates for the user to choose from.

According to an aspect of the invention, a text input device comprises a text prediction component for predicting a plurality of follow-up input words based on an input text context. The text prediction component outputs a set of follow-up candidate words that best fit the present input text context, which may comprise, e.g., some or all previously entered words. The text prediction is word based and may use any information on the possibility of word sequences, such as statistical word pair/tuple frequencies or word grammars. Preferably, the word prediction component generates follow-up input word candidates for the input text context based upon a word dictionary and a word bigram or a word trigram.

Further is provided a character handwriting recognition component for recognizing at least two handwritten character candidates corresponding to an input pattern. The handwritten character candidates are determined based upon handwriting input received from a touch sensitive input field. Any kind of handwritten character recognizer that assigns a character candidate to the handwriting input based on a similarity between an input pattern and character representations may be used. Preferably, the touch sensitive input field is configured to allow the user to enter the input pattern with his/her finger, e.g. by writing on the touch sensitive input field with the user's finger. In this case, no stylus or pen is necessary which is particularly useful for mobile or handheld devices.

The text input device further comprises a candidate word filtering component for filtering the set of candidate words received from the text prediction component based on the recognized handwritten character candidates. If the recognized handwritten character candidates are the first character for a word, then the candidate words are filtered such as to start with the first character candidates. In case an input pattern corresponding to a second character candidate is subsequently entered and recognized by the character handwriting recognition component, the set of candidate words is filtered to start with the first and second recognized character candidates, and so on. Thus, by entering more characters the candidate word set is reduced and the selection of remaining candidates for the present text context is progressively refined to comprise words that match the user input. It should be noted that the filtering of candidates operates on a word level while the restrictions are on a character level. Thus, it may be possible to restrict the set of word candidates irrespective of the length of words in the set with the input of a few characters.

Further is provided a word presentation component for presenting candidate words from the filtered set of candidate words to the user of the device. The presentation of the candidate words is preferably updated with each entered character and reflects the current set of filtered candidate words. The word presentation component may allow for scrolling of candidate words on a display device if the number of candidates in the filtered candidate set is larger than the number of words that can be presented simultaneously on the display.

The text input device may comprise a touch screen device displaying the user interface of an application program and the presented candidate words transparently on top of each other. The touch screen device may further comprise the touch sensitive input field for receiving the handwriting input. Preferably, the touch sensitive input field corresponds to the screen area of the touch screen device. Thus, the user can write input characters anywhere on the touch screen device, and it is not necessary to enter data in separate input fields. In an embodiment, the user interface of an application program and the user interface of the text input component lie transparently one upon the other, and the user can use the complete touch screen for writing input characters, possibly with his finger. The word presentation component may arrange a sub-set of the filtered set of candidate words on the touch screen device such that the distance between the presented candidate words allows the user to select a candidate word by touching it with a finger. Thus, a uniform user interface is provided that is best suited for operation with a finger.

A word selection component then receives a user selection of a presented candidate word from the user. The selection is preferably done by touching one of the presented candidate words, or by any other input means such as scroll wheel or selection buttons. The selected word is then used as input for other applications such as a word processing or email application.

The word prediction component may then receive the word selection from the word selection component, update the input text context in response to the selected word, and predict a new list of candidate words for the updated input text context. In a different embodiment, the prediction component may read out a text field of the text receiving application to obtain the updated context. The user may then continue with a character handwriting input for the next intended input word, thus completing the text input.

The present invention allows a user to enter a word by a combination of single character input and word selection from presented candidates. Thus, in most cases it is not necessary to enter all characters of a word, but only as many characters as necessary to narrow down the presented candidate words until the user can conveniently make a selection without heavy scrolling of displayed candidates. In that respect, the better the predicted candidate words fit into the present text context (i.e. the previously entered words), the smaller the initial set of candidate words is and less input characters are necessary to restrict the candidates towards the intended word.

In some rare cases, the initial set of candidate words output from the text prediction component will not include the intended word. This may be for new words that the text prediction component has not seen before, e.g. proper names, or words that are very rarely used in the present text context. In this case, it is still possible to enter a word by inputting each character via the character handwriting recognition component.

Preferably, the text prediction component outputs a ranked list of input candidate words according to respective scores that indicate the likelihood or probability of a candidate word to follow the text context. This allows the word presentation component to present, e.g. on the display device, at least one candidate word from the filtered list of candidate words in accordance with its respective score. For instance, the candidate words are presented in descending order of probabilities so that the most likely candidate is presented in a first position of a list, the second most likely candidate in a second position, and the least likely candidate that matches the input character(s) is arranged in last position of the list. Preferably, the list of candidate words is presented so that the user can easily select the most likely words, e.g. without scrolling. Less likely words may initially not be presented on the display, but may be displayed when the user scrolls down the list. This helps to select likely words and reduces the average number of interactions required by the user to select the intended word.

According the invention, the character handwriting recognition component determines a plurality of character candidates for a particular handwriting input. Thus, the filtering of candidate words is "soft" and less restrictive. This will help reducing the impact of the imperfectness of the character handwriting recognition component that is typical for pattern recognition. Preferably, confusability information of handwritten characters is taken into account when generating alternative character candidates for an input pattern. As it is difficult to discriminate between some handwritten characters (e.g. "x" vs. "X", or "5" vs. "S") based only on the input data from the touch sensitive input field, it is preferred to filter the list of candidate words under consideration of the plurality of alternative character candidates in order to prevent incorrect removal of candidate words from the candidate set. In consequence, further characters may be added to the character candidates to accommodate for typical misrecognitions. The added characters are characters that are likely confused with the determined character candidates. This set may be defined or changed by the user on the device in order to account for personal properties of the letters. For example, the user may take out letters that are never misrecognised and thus sharpen the prediction (because less candidates will survive) or add a letter that looks similar to another one of the user.

In most cases, the intersection of candidate words generated by the word prediction with the character candidates recognized by the handwriting character recognition keeps the intended word in the candidate list while restricting the number of possible follow-up words sufficiently to allow a convenient word selection by the user. This is because word prediction inaccuracies and character recognition errors are mostly disjoint. Thus, most character recognition errors can be compensated by adding alternatives based on confusability information. For instance, the character ambiguity between "5" vs. "S" is mostly compensated as the text context very likely determines whether a follow-up word comprises (or even starts with) "5" or "S". Preferably, the plurality of character candidates for a particular input pattern is determined with associated scores for each candidate, the scores indicating the likelihood of the respective character candidate to represent the input pattern.

A character bigram (or trigram or n-gram) may be applied to the handwritten character candidates determined for the present handwriting input data to improve the character recognition performance. For instance, the character bigram is conditioned on a character candidate that was determined for a previous input pattern and thus estimates the probability of successive characters. The bigram score may be combined with the scores of the character candidates to calculate a combined character score representing the likelihood of the respective character candidate to match the input pattern under the condition of a previously recognized character. For a set of character possibilities as described in the previous paragraph, the addition of bigram information will even more likely rank improbable combinations lower such as "5e" vs. "Se". The plurality of the combined character possibilities would then be sent to the filtering component (i.e. "Se" and "5e"). Note that due to lower scores of improbable combinations, surviving word candidates would also rank lower. In case that multiple character candidates are generated by the character handwriting recognition component for a particular handwriting input, the multiple character candidates generated for the previous input pattern may be used as predecessor in the bigram when calculating the bigram scores for the present character candidates (corresponding to the present input pattern).

A preferred character handwriting recognition component comprises a neural network to determine at least one character candidate in response to the handwriting input data received from the touch sensitive input field. A neural network can be employed as pattern recognition means which determines best matching categories for an input pattern when trained properly. Further, neural network classifiers can generate scores that indicate the degree of the pattern match for the individual categories. It can even be shown that these scores correspond to likelihoods or conditional probabilities for the categories given the input pattern. A preferred neural network for mapping input patterns to character candidates is a feed-forward multilayer perceptron network.

The character handwriting recognition component may comprise handwriting input data processing means for receiving a sequence of 2-dimensional input data from the touch sensitive input field (i.e. the dots activated by the user when writing on the input field). The input data may be arranged in a one-dimensional input layer of the neural network. The neural network then calculates its output values, i.e. the activations of its output units, given the presented input layer values, based on the network topology and the transfer functions of the units.

In order to remove an offset of the input pattern, the handwriting input data is preferably translated to a reference position, i.e. the origin of a coordinate system. The handwriting input data may be re-scaled to result in a normalized representation of the handwriting input data. This makes the input data representation independent of the actual size of the input pattern as written by the user on the touch sensitive device and allows, e.g. writing by pen or finger. The handwriting input data may further be re-sampled to result in a predetermined number of 2-dimensional input data samples for presentation to the neural network.

The character recognition may be improved by determining the aspect ratio for the handwriting input data, and determining the at least one handwritten character candidate under consideration of the aspect ratio. For the recognition of some characters, the aspect ratio (i.e. the ratio between the x and y dimension of an input pattern) is a valuable information which may be impaired by rescaling the input data. Furthermore, the number of input data samples of the handwriting input data may be utilized in the character recognition. Preferably, the at least one handwritten character candidate may be determined under consideration of the number of input data samples.

The character handwriting recognition component may further comprise character timer means for determining a character time-out. The handwriting recognition component may then determine the end of handwriting input data associated with a character based on a character time-out indication from the character timer means. This helps determining when the input data corresponding to an input pattern is complete and can be processed, e.g. scaled, re-sampled and presented to the character recognizer. Preferably, the timer is configured dynamically, e.g. depending on the number of input samples already entered. For instance, when a recorded part of an input pattern already comprises a large number of input samples, it is more likely that the end of the input is reached soon, i.e. in a short time. When the recording of an input pattern has only started recently, i.e. only a few input samples have been received, a longer time-out is needed for reliably detecting the end of the input process in order to avoid cutting off final pattern segments.

The character handwriting recognition component may comprise a teach component that determines a correct character corresponding to the particular handwriting input based on the word selected by the user and teaches the neural network to indicate the correct character as the at least one character candidate generated for the particular handwriting input. Thus, the neural network may be trained on the device on user specific variations for patterns of characters. The teach component may determine, based on the selected candidate word, a correct character corresponding to the handwriting input data and teach the network to correctly recognize the correct character given the corresponding input pattern.

The training of the neural network is preferably based on the back-propagation algorithm and may include the calculation of error values of the neural network output layer units. The error values are then back-propagated in the neural network to train the network units for the present handwriting input data so as to reduce the error values. The training of the network units may be based on an error gradient descend approach which allows minimizing the overall error by adjusting parameters of the network units in the direction of the error gradient.

Further aspects, advantages and features of the present invention are apparent from the dependent claims, the detailed description and the accompanying drawings, in which:
Fig. 1 shows a typical handwritten character user interface;
Fig. 2 shows four main variants of the handwritten lower case letter "x";
Fig. 3 illustrates schematically the components of an embodiment of the present invention; and
Fig. 4 shows a graphical user interface of an embodiment of the present invention.

In the following, each component of preferred embodiments of the invention is described separately and reference is provided to other components where the interaction yields a synergetic advantage over existing solutions.

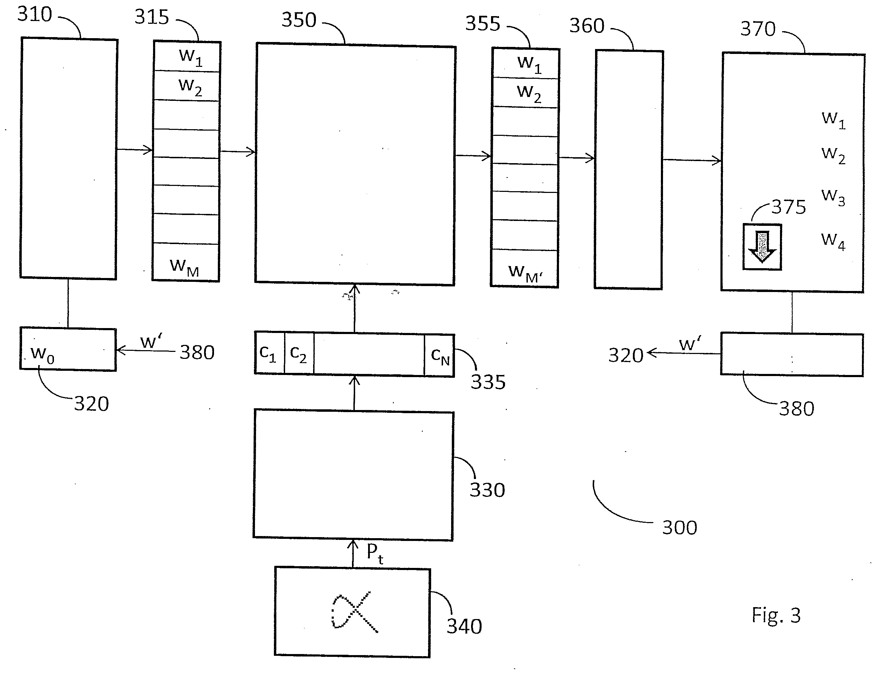

Fig. 3 illustrates schematically the components of a text input device 300 according to an embodiment of the present invention. A text prediction component 310 determines a list of candidate words 315 (W₁ ,..., W_{M}) for a current input text context 320, e.g. a previously entered word W₀. The text prediction component further estimates scores SW₁, ..., SW_{M} for each candidate word, the score indicating how well a candidate word fits in the present text context, e.g. the probability p(Wᵢ | context) that a candidate word Wᵢ is succeeding the context.

A character handwriting recognition component 330 receives handwriting input data from a touch sensitive input field 340, e.g. a touch screen. The character handwriting recognition component 330 determines for the present input pattern Pₜ received from the touch sensitive input field 340 a plurality of matching character candidates 335 (C₁, ..., C_{N}). Preferably a neural network pattern recognizer is employed to determine the character candidates 335, each associated with a corresponding score SC₁, ..., SC_{N}.

The character handwriting recognition component 330 uses information what pixels (dots) were set on the touch sensitive input field 340 in what order or roughly speaking the time information available in the sequence of input samples. Therefore, the recognition component also involves the recording of the pixels activated by the user when writing on the touch sensitive input field 340 via a stylus or finger.

The list of candidate words 315 and the set of character candidates 335 are provided to a candidate filtering component 350 that filters the candidate words 315 based on the character candidates 335. The candidate filtering component 350 comprises a character memory to store previously recognized character candidates. Thus, the filtering may be based on a sequence of characters entered by the user for inputting the present word. For instance, two characters may have been entered and the filtering component 350 restricts the list of candidate words to the words that begin with the two recognized characters, i.e. words whose first character matches the first recognized character and whose second character matches the second recognized character.

The candidate filtering component 350 further comprises a character bigram module for calculating the probability of character sequences, in particular the probability p(Cᵢ | Cⱼ) where Cᵢ is one of the character candidates 335 (C₁, ..., C_{N}) recognized for the present input pattern Pₜ and Cⱼ is a character candidate recognized for the previous input pattern Pₜ₋₁. The candidate filtering component 350 then calculates a score SF for each of the candidate words that remain after the filtering operation.

The filtered list of candidate words 355 including the scores SF for each candidate word is then passed to a word presentation component 360 that presents the candidate words, ranked according to their respective scores, on a display device 370, preferably a touch screen that corresponds to the touch sensitive input field 340. In case the number of candidate words included in the filtered list of candidate words 355 is larger than the number of words that can be displayed simultaneously, only the candidate words having the largest scores SF are displayed on the display device 370, and the other candidate words are only displayed when the user activates a scroll mechanism of the user interface, e.g. a scroll button 375. Thus, the user can easily select one of the displayed candidate words having the largest scores.

A word selection component 380 receives the user selection of a presented candidate word and forwards the selected candidate word W' to an application. Further, the selected candidate word is used to update the text context, e.g. by appending the selected word to the previous context. Given the new context, the text prediction component 310 determines a new list of candidate words and the word selection can continue until the user has entered all intended words.

Details of the components and methods according to aspects of the present invention are set out in the following. Next, the on-device character recognition procedure according to an embodiment of the invention is explained in detail.

The recognition process from recorded pixels (dots) into a recognized character can be divided in four gross steps: Recording, pre-processing, recognition, post-processing.

### Recording

Data related to an input pattern is sampled, recorded and stored in an ordered list of dots. A dot is an input data sample having a 2-dimentional value that represents a position in the input field. The first dot recorded is in position 1 of the list, the second dot recorded in position 2 and so on. Dots contain the x and y position information (horizontal and vertical) of a pixel activated by the user when writing on the touch-sensitive input field such as a touch screen.

The character recognition process assumes that an input pattern is finished when there was no new dot activated within 300ms after the last dot was entered. One of ordinary skill in the art will appreciate that this time-out is arbitrary and may depend, e.g., on the size of the input field. A fixed time-out for detection of an input pattern end has the disadvantage that the user has to wait until the time-out before the system responds or writing a new input pattern.

According to an implementation of the invention, this time-out is changed dynamically. Real data analysis revealed that users need on the average about 70 dots to write a character (this, of course, depends on the resolution and sampling rate). Thus, the time-out may be reduced to 100ms after the first 50 dots have been recorded (= number-of-dots threshold). Again, these numbers are arbitrary and depend on the concrete application. In general, the time-out for detection of a character input end is made dependent on the number of activated dots and reduced the more dots are activated by the user. This allows a short time-out for longer input dot sequences. Thus, towards a statistical end of an input dot sequence, the system responds quickly due to a short time-out which enhances usability of the text input device as the user does not have to wait long before making a word selection or writing the next character.

### Pre-processing

The character input information (= set of activated dots) is translated to an absolute position of the input field where the lowest dot of the character has the vertical value zero and the leftmost dot has the vertical value zero. This means that the whole representation of the input character is moved to a standardized position in the coordinate system. This allows the user to write anywhere on the input field, and the resulting offset is automatically compensated.

The set of activated dots is then re-scaled in a way that the dot with the highest vertical value has a value of 1.0 and the right most horizontal dot has the horizontal value 1.0 (= normalization to 1). This procedure re-scales a character to a standardized form so that the user can write the character in any size and in any aspect ratio. One of ordinary skill in the art will appreciate that the data may be normalized to any other value e.g. 100 for using it on integer CPUs.

There may be special cases where the re-scaling is not appropriate, for example, for the lower case version of the letter "L" (= "1") or the upper case version of the letter "i" (= "I"). Rescaling of such single vertical lines in the horizontal dimension would not lead to a standardized representation. Thus there may be a threshold of values in the horizontal or vertical dimensions and only if this threshold is reached, rescaling of this dimension will be done.

Next, the set of activated dots is re-sampled in such a way that the number of samples always amounts to 50 (or any other number that is constant over all recognizable patterns). If the user has used for example 30 dots to write the character, the software will interpolate the activated dots to 50 samples; if the user has used 60 dots, the software will reduce the samples to the amount of 50. This interpolation may be done in various ways: linear, spline and the like.

Especially the treatment of discontinuities or jumps in lines (for example when writing an "i", there will be two dots that have a large distance between them: the last dot at the end of the lower base line and the first dot of the i's dot) can be handled in various ways.

The re-sampling of the input data leads to a standardized set of data samples that is particular suitable for the neural network. In other words, re-sampling generates a data vector of the same dimensionality as the neural network input vector. Re-sampling implies that it doesn't matter how many pixels (dots) the users needed to enter the character. It also renders the recognition algorithm independent of the sample rate of the touch-screen.

The values of the re-sampled dots are arranged in a one dimensional array such that the two position values of a dot are put side by side and dots are put side by side. This results in a data representation as: x1, y1, x2, y2, x3, y3, ..., where x1 is the first (offset compensated, normalized, re-sampled) sample value in x-direction, y1 is the first sample value in y-direction, x2 the second sample value in x-direction, etc.

### Character Recognition

The one dimensional data array is used as an input vector for a three layer back propagation network with an input layer that has 100 units (= 2x50 values). The network has a hidden layer that forces the network to generate abstract representations of parts of the input vector. The output layer of the network has at least as many units as there are characters to recognize. According to a basic embodiment, each neural network output unit is assigned to a corresponding character and its output value is used to indicate the presence of this character for the presently given input pattern. A more sophisticated network has even more output units as described in the training procedure below.

According to neural network theory, a properly trained network having sigmoid output units generates scores at its output units that are related to the conditional likelihood of a character given the input pattern. The net generates values between 0.0 and 1.0 for each character, so that all characters can be sorted in descending order of these scores. As will be described in the training procedure, the most probable character will have a value close or identical to 1.0 and the least probable character will have a value close or identical to 0.0 (as the teach vector had 1.0 for the correct character and 0.0 for all others).

The output of the character recognizer is generated as follows:
In the simplest non-inventive case, the most probable character determined by the neural network will be given out as the recognized character candidate.

According to the invention improving the interaction with the word prediction component the top N characters as determined by the neural network are output, i.e. the N characters having the highest output values (scores) of their respectively associated network output units. The top N characters for the given input pattern are then included in a character candidate list and forwarded to the candidate word filtering component.

As an alternative covered by the invention, a set of pre-determined characters for the most probable character (or the top N characters) may be returned by the character recognizer. For example, "u" may rank highest and "n" may rank second, but the character set "u", "U", "v", "V" may be delivered to the prediction component. The assignments for each character may be definable by the user. Preferably, confusability information such as visual similarity is applied to determine a set of commonly confusable characters for each candidate. When a character candidate is selected for a given input pattern by the neural network recognizer, its confusability set is retrieved and the confusable characters co-activated and included in the character candidate list that is forwarded to the candidate word filtering component.

### Post-processing

The evaluation of a pattern recognition neural network leads to the conclusion that some visually similar characters are often confused, for example "s", "S" and "5" or "g", "9" and "q" and so forth. These common recognition errors may be countered in a post-processing stage where the output vector of the net is analyzed and the context of prior input patterns or character candidates is taken into account.

A character bigram may be used to evaluate whether the character candidate on position one or the character candidate on position two is more probable to fit the present input context. The character bigram generates a score for each candidate that indicates the probability of the candidate given the candidate(s) generated for the previous input patterns. The bigram score is then combined with the neural network score for the candidate to generate a single candidate score that is used for the selection of the most relevant character candidate(s). This is preferably the case when the net generates an output vector where at least two values are similar, e.g. 0.4 and 0.5, as this indicates uncertainty in the character recognition result. The procedure may also be applied when the top most character has a value below some threshold (e.g. <0.9) which also indicates uncertainty.

As a further option, the aspect ratio of the input pattern (i.e. the ratio of input pattern extension in x versus y dimension) could be used to determine whether the letter is upper case or lower case. Analyses of a representative data set have shown that users write by using the same width but a different height when writing upper versus lower case letters. Thus an upper case "S" could be distinguished from a lower case "s" by looking at the average aspect ratio for this user. The aspect ratio may be compared to predetermined values for the letters in question: The upper case "S" may have a ratio < 1.0 (= x/y where the vertical extension of the letter is larger by value than the horizontal extension) whereas the lower case "s" may have a ratio close to or higher than 1.0.

As a further option the number of dots used for writing a character could be used to determine upper versus lower case versions of a character: Upper case versions of characters usually need more dots compared to lower case versions as users actually write them using more vertical space. Again, the number of dots used in writing could be matched against an average number for this character, either derived from user specific data recorded during usage or from a database available on delivery. The data for this decision can be obtained after recording of the input pattern is finished as the mere dot count is used.

### Neural network training

The training of the neural network is illustrated next. According to an embodiment, the network is trained in a supervised/teaching manner: The net (net, network and neuronal network are treated as synonymous in the present invention) has to learn how to map a set of dots of the input pattern to a given character. When recording a training set, users are presented characters that they have to write on the touch sensitive input field. This data is then used for training the net.

In order to train the net whose output is a vector of scores with values between 0.0 and 1.0 generated by the respective output units, an appropriate character representation is needed. For instance, characters are assigned to the output units as pattern categories that are to be recognized for presented input patterns. The corresponding position in an array of teach or target values for the output unit representing the correct character for an input pattern is set to 1.0, while all other values are set to 0.0. The following tables illustrate an output representation for the letter "K" and an output representation for the letter "S"

In this way every character has a unique representation that is a vector of 1.0 and 0.0 where the position of the value 1.0 in the vector defines the correct character for the input pattern. Please note that it is not necessary to use the exact values 1.0 and 0.0 as target values for the network training. To avoid saturation effects in output nodes having a sigmoid like non-linear transfer function, it may be beneficial to use values that deviate from these "ideal" values (e.g. 0.95 and 0.05).

Now the net can be trained by back-propagating the error that occurs between the bottom-up generated recognition output vector (i.e. what character the network would estimate that the input vector (pattern) represents) and the top-down generated teach signal (what the character actually was). This is a standard procedure and can be done in various ways following the prior art. Note that not only the classical back-propagation can be used for reducing the error between recognition signal and training signal but also similar training algorithms/formulae such as RProp or QuickProp.

Moreover, training of the network may also be used during usage on the device where the character recognition is used. This would lead to an on-device adaptation of the recognizer to the user's personal style of handwriting. The teach signal for the training may be acquired from the word prediction component explained in more detail below.

The following optional modifications of the training procedure may be applied to improve the learning efficiency and recognition performance of the network.

According to the invention, the output vector is generated in such a way that not only one position in the output vector may correspond to a given character. A cluster analysis of real data reveals that a single character is typically written in up to ten different ways.

The cluster analysis shows that for a given character there are two or three mainly used visual forms of the character (subversions), and some more minor variants. When generating an output vector, one could use this information in order to allow the net to learn different variants of one character, and not force it into mapping all visual forms to one single character representation. This would involve a cluster analysis of the data that yields a number of clusters for each character. These clusters would then be ordered by number of appearances in the recorded training data set (e.g. the numbers given in Fig. 2). Next, each single recorded pattern would be tagged by the sub-version of the character, i.e. it would be assigned to one of the clusters. For setting up the output vector, one could decide to use clusters that have at least 10% of the recorded characters in them or at least 40 recorded patterns or any other rule. In this case, the pattern categories are the character sub-versions. The output vector would then have not only one but as many as number of clusters available versions for a character. The training procedure would then teach the net how to map a recorded pattern to its respective sub-version of the character. This means that the net is not arbitrarily trying to map a recorded pattern to one of the sub-versions, but is also given the knowledge which one of the sub-versions (=clusters) of the character is meant.

The following tables show output representations for sub-versions for the letter "X"; first sub-version 1 and sub-version 4

An optional approach for generating the output vector may be to assign other characters' positions in the array an intermediate value between 1.0 and 0.0 so that they are co-activated. This may reflect the similarity between characters or their variants and leads to a smoother ranking of the output vector. For instance, character confusability information may be used to co-activate output units assigned to characters that are confusable to the present input patterns. As an example, the output units assigned to the group of characters "s", "S", "5" may receive a teach value of 1.0 assigned to their respective output vector positions when any input pattern belonging to one of these characters is to be learned. A second way of providing teach values would be to assign 1.0 to the matching letter and a smaller value to the characters that may be confused with it (e.g. 0.5). Thus, the net does not have to discriminate strongly between visually similar characters which would be difficult and sometimes even impossible. The proposed assignment of teach values avoids that internal resources are dedicated to the discrimination of visually similar characters. According to the proposed approach, this discrimination is not demanded by the character recognizer, but can be provided by considering the text context in the prediction component. For instance, discrimination between the character group "s", "S", "5" is, in most cases, rather simple under consideration of the context, i.e. the position of the character in the present word and the identity of previous word(s).

The advantage of the present invention is to use separate sources for limitation information that provides independent restrictions to the presented characters and words. The word prediction component and the character recognition component operate on different principles in estimating the present character and word, and as such their errors and ambiguities are mostly disjoint. By intersecting the word prediction results with the character recognition results, a very precise prediction of words corresponding to one or more input pattern is achieved.

The input vector may further receive some noise to make the net more stable to unseen pattern versions of a character. This is achieved by adding random numbers between 0.00 and 0.01 to all values of the input vector after the pre-processing, while keeping them between 0.0 and 1.0 (i.e. not > 1.0). Of course, more intelligent routines could be imagined to add noise, for example having different noise for horizontal and vertical values or character specific noise or even more complex distortions such as stretching or rotations.

Next, the learning rate for the net may depend on the performance of the last training cycle. Classical back-propagation training has a learning rate that defines by what amount the error between recognition and training signal is reduced. This learning rate is usually reduced after one cycle through all training data. Thus there may be initially a learning rate of, e.g. 0.9 and then after all training patterns were presented for the first time to the net and have been learned, the learning rate may be reduced to 0.8 for the next cycle. This ensures that the error is reduced and a minimum of the error is found. However, the reduction of the learning rate by rule is not very efficient, i.e. it may take by orders more time than necessary to find the minimum. Other training algorithms like the aforementioned RProp or QuickProp tackle this by tuning the learning rate at single neuron level for each single training pattern. The general computational principle is that the learning rate depends on the error the net is generating: The higher the error the higher the learning rate. This leads in general to a faster convergence to the minimum. This is a very fine grained modification of the training procedure and could also be implemented for the present invention. An alternative way to determine the learning rate from the error is to average the error of the whole output layer over a full cycle, and compute the learning rate for the next cycle from this error. This is a more macroscopic way of defining the learning rate, but it has the advantage of taking all training patterns into account before changing the learning rate. Other algorithms take only the current pattern into account which may be erratic.

In networks where the learning rate depends on the error rate, the oscillation between two minima is very common. In order to keep the network from oscillating between two minima, the addition of noise per training cycle as described above is very helpful and effectively prevents the net from oscillating.

### Word prediction

The word prediction component according to an embodiment of the present invention is illustrated next. The word prediction component predicts the next word in a stream of words defining a text context and helps the user to enter text into a device. It automatically analyses the characters and words before a present cursor position in an input text in order to predict the next word. Usually, the word prediction component generates a ranked list of many word candidates and displays the top M of these candidates in a list to the user. The user can then choose the intended word from the presented list. When the user selects a word from the list, follow-up words will be shown so that the user can enter whole texts by selecting words rather than entering characters.

If the intended word is not among the predicted word candidates, e.g. because it is ranked too low by the prediction component to be displayed, the user can enter a character to re-estimate the presented word list. The system will then reduce the set of candidate words to words that match with the recognized characters, and show again the top ranking words. When the first character is input by handwriting, the predicted candidate words are restricted to start with the N characters determined by the character handwriting recognition component for the recorded input pattern. As already mentioned, the character recognition component generates a set of character candidates as the character recognition is not perfect and recognition errors, e.g. among visually confusable characters, are anticipated. In case the intended word is not among the displayed word candidates, the user may either scroll down the list of presented word candidates, or enter another handwritten character by writing on the touch sensitive input field. The user can thus progressively constrain a long word candidate list to a list of words that actually contain the intended word.

It must be noted that the proposed text input approach does not require all characters of an intended word to be written by the user. Depending on the present word context and the initial characters of the intended word, it will be sufficient to enter only a few characters of the word to narrow down the word candidate list so as to present the intended word on the display. Of course, some letters have a large selectivity - meaning that only a few words start with these letters - while others do not limit possible words from a word vocabulary that much. However, it should be kept in mind that the word prediction component determines candidate words based on the present text context which already limits the candidate words irrespective of their initial letters. The intersection of an initial letter (or a few initial letters) with the text context results normally in a manageable number of candidate words that can be presented for selection to the user.

In the present context, it is not important how the word candidate list is generated - it may be generated through word bigrams, trigrams, grammar or any other algorithm that analyses the text before the present cursor and generates a list of candidates. Word bigrams for example store every probable follow-up word for each single word in the dictionary. The follow-up words are often assigned a score that corresponds to the probability of appearing after the respective context word. This list of follow-up words may be ranked according to this score and can be put out as a candidate list for the present context. A word trigram would store all probable follow-up words for a combination of two predecessor words in the dictionary. Due to more context information trigrams usually deliver better predictions at the cost of increased storage. Finally a different class of prediction may be used that refers to (natural language) grammar rules describing what word class can follow which. The important aspect in the present invention is the interaction between the recognition component and the prediction component. According to the invention, the component that recognizes handwritten characters interacts with the word prediction component in order to improve the quality of the recognition of the recognizer as well as make the prediction component more flexible.

As noted above, handwritten character recognizers generally tend to confuse visually similar characters such as
- s, S, 5
- u, U, v, V
- f, F, E
- I, 1, 1
- g, 9, q
- o, O, 0
- B, D
- w, W
- z, Z, 2
- and so forth.

The present invention is accepting that recognition components are always prone to such confusions. In the present invention, the interaction between the word prediction component and the character recognition component is used to relief the user from correcting incorrectly recognized characters on a character level, as well as improving the recognition system by generating a "teach" signal for online/on-device learning of the neural network from the word prediction component.

It is assumed that the word prediction component initially predicts a large set of candidate words that would fit the present context. The recognition component sends a few characters to the filter component and therefore causes the filter component to constrain the current set of candidates to match the beginning of candidate words as determined by the handwritten character recognizer. When entering further characters, the set of candidate words would be further reduced. This procedure can be understood as a progressive filtering of candidate words as those candidates will be eliminated that do not start with the initial characters entered by handwriting.

The performance of the text input method according to the present invention is improved in that the recognition component will output not only one candidate character (letter or digit) that is assumed to be the entered character (e.g. "u") but a plurality of characters (e.g. "u", "U", "v" and "V"). One of the characters is presented to the user, but actually some or all of these characters are sent to the filter component. Word candidates would then be filtered out only if they don't match any of these the characters. In this way, word candidates would remain that have "u", "U", "v", or "V" in the current character input position.

An even more striking example of the power provided by the interaction of word prediction and character recognition is the inclusion of digits: if the user wanted to enter the character "s", but the recognition component would guess it is a "5" (number five), normally no candidate words would remain after filtering as nearly no word has a "5" in it. However if the characters "s", "S", and "5" are sent to the filter component, also all words having an s in the current position would remain.

The handwritten character recognition component may be further extended by putting out the recognized characters for the present input pattern in an ordered fashion so that the first character is the one that has the highest probability of being the entered character, the second one the second highest probability and so forth. This order and even the associated probabilities could be used to influence the order of the candidate words from the prediction component. Preferably, a score is assigned by the character recognition component to each recognized character candidate, and the character score is taken together with the word prediction score to rank the word candidates. For instance, when both scores represent probabilities that the candidates match the present input/context, a joint probability may be calculated that indicates how well a word candidate fits the present text context and the entered input pattern(s). This is particularly useful to accommodate ambiguity/(un)certainty in the word prediction and/or character recognition. For instance, when the character recognizer is quite certain (e.g. 70%) that an input pattern belongs to a particular character, but a 30% uncertainty remains that another character was intended by the user, the word candidates would be ranked under consideration of the character scores, which may bring word candidates starting with the particular character to the top. If the user is unsatisfied with the presented word candidate list and enters another input pattern, e.g. resulting in a very reliable handwritten pattern recognition with 90% certainty, another reranking of the word candidates under consideration of the recognition scores for both input patterns may reverse the initial ranking and produce the intended word in a top position in the candidate list.

It should be noted that neural networks properly trained by the back-propagation algorithm are known to produce output values at their output units that are estimates of the conditional probability for the assigned category (here character or character sub-version) given the presented input pattern. Preferably, these output values are used as candidate scores, possibly after an additional normalization step that makes sure that the scores of all categories add up to one.

Another optional extension to the text input system of the present invention is an automatic digit/letter correction. If there are characters in the current input string that are definitively digits, the system could also propose a string where all positions are translated to their respective digits, for example the string "34qI7" is automatically transformed to "34917". This is based on the understanding that mixed letter/digit inputs are rather rare, and most of the time the user intended to input either a digit string or a letter string. The text input system may determine to convert the input character string to a number based on the absolute number of recognized digits, or based on a relative number of digits provided in the character string. For instance, if more that 50% of the recognized characters are digits, the system may choose to convert the complete string to digits. Otherwise, the system may convert the digits to corresponding letter characters. Preferably, the conversion is based on general confusability information such as that the characters "s", "S", and "5" are likely confused, or the conversion applies the actual character candidates recognized by the handwritten character recognizer for each input position to determine an alternative character for the conversion. Alternatively, there may be also an input means, e.g. a digit button on the screen, to force the system to interpret the whole string as a number.

Furthermore, the performance of the recognition component may be improved by using information available from the prediction component. Given that the recognition component is able to learn on the device, it is desirable to have a learning algorithm where the user does not have to explicitly correct a misrecognised character (such as deleting a misrecognized character or activating a teach mode or the like). In the current invention this is possible as the system would know which input pattern was recognized as what orthographic character, and more over, through the prediction component and the word selection by the user, it would know what character was actually intended in each character input position. The user selects a predicted word, e.g. by tapping one of the presented word candidates, and the selected word can be used to identify a sequence of correct characters corresponding to the sequence of input patterns. Thus, the system can correct individual misrecognised characters by looking at what the recognized characters produced by the character recognizer were (e.g. "u", "U", "v" and "V") how they match to the characters of the selected (correct) word.

The correct character for an input pattern identified that way is then used to generate a teach signal for the net by setting a target value of 1.0 for the output unit assigned to the correct character and 0.0 to the other output units as described above. The errors between the outputs of the units generated for the respective input pattern and the assigned target values is then used to correct the internal representations of the network units (i.e. internal weights). The errors at the output units are back-propagated to other network units for correction of their respective internal weights. According to this aspect, the system implicitly corrects and teaches individual misrecognised input patterns just by the selection of a (full) word by the user.

Thus, after the occurrence of a word separator (full-stop, blank, comma and the like) a cache would memorize all input patterns up to the point where the user either enters another separator or selects a word from the prediction component. All of these stored patterns would be trained in the handwriting recognition component as now all of their correct orthographic character equivalents are known for generating the teach signal via setting the output vector.

When the clustering / character sub-version approach is implemented, there may be an additional database that has prototypes of the sub-versions of the characters in it so that the matching cluster can be determined and the correct teach-signal can be generated. Another way to determine the output unit to be taught is to look at the errors of all of the subversion in question and determine the output unit with the lowest error as the one who gets the positive teach signal (e.g. the target value of 1.0). Output units associated with 'wrong' characters or other 'wrong' subversions of the 'correct' character will receive a negative teach signal (e.g. 0.0 for 'wrong' characters, and 0.0 or 0.5 for 'wrong' subversions). In this way the system would automatically converge to one or two sub-versions that the user normally uses.

### User interface

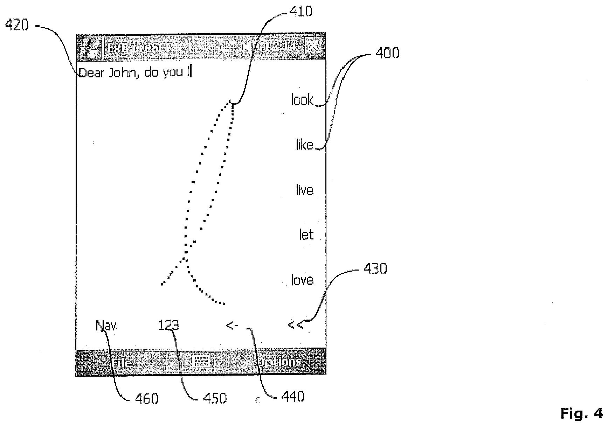

Next, the arrangement of the interface components and the user interaction of an embodiment of the invention are described with reference to Fig. 4. The screen in this embodiment is touch sensitive. A text-receiving application 420 is shown, and the present invention incorporating the text input system is acting on a visually transparent "recognition" layer on-top of the application 420. Thus, the text-receiving application can be different software for different purposes (short messages, web-pages, word processors, emails, address books, forms and the like).

When the text-entry system is activated, its graphical user interface is displayed in a dedicated color (e.g. red) signaling that the system is in text entry mode and also separating the user interface components of the text-input method from the user interface components of the text-receiving application. There may be more modes than this, for example a navigation mode, a symbol mode, a number mode and so on. All these modes may have their own color. There may also be other ways to signal the different modes and also other ways to separate the user interfaces (transparency, icons, fonts, etc.).

A dedicated area 400 in the text input layer presents candidate words to the user. These are positioned on the left or right side of the screen and are arranged in a way that it is convenient to select one of them by finger without selecting a second one. When the user taps one of these words (by generating a very short line, a dot cloud or even a single dot), the selected word is sent to the receiving application 420. The presentation area 400 may also move dynamically in order to not overlap with the current position of the cursor in the receiving application 420.

The software may be configured by the user to preferably show the candidate words in the defined area 400. For right-handed users, the candidate words may be presented on the left hand side, for left-handed users, the candidate words may be displayed on the right. This allows for texting using two hands: the preferred hand will write the letters while the other (thumb) can be used to select candidate words.

Characters 410 can be entered by touching and/or moving a stylus or the finger, and thus generating a line or lines on the screen. The recognition component will recognize the character corresponding to the input pattern. If the user enters a character, the word prediction component will automatically update the candidate words to match the just entered beginning of a word. In this way, the user could enter one or two characters of a word and then tap the word when it is predicted and displayed. A selected word is sent to the text-receiving application. In this way, the user can enter a full word exclusively by writing characters. Lines that cross areas for words are also included in the data set for the recognition. The system may determine whether the majority of the pixels was generated within a word area or not.

There may be additional gestures that lead to other actions than the insertion of recognized characters or words. Gestures are simple patterns that can be generated by the user and have a defined representation in the output layer of the neuronal network. In this way the neuronal network can be used to recognize letters, digits, punctuation and gestures in the same way.

This written description uses examples to disclose the invention, including the best mode, and also to enable any person skilled in the art to make and use the invention. While the invention has been described in terms of various specific embodiments, those skilled in the art will recognise that the invention can be practiced with modification. Especially, mutually non-exclusive features of the embodiments described above may be combined with each other.

## Claims

1. Text input device (300) comprising:
a text prediction component (310) for predicting a plurality of follow-up words based on a text context, the text prediction component (310) outputting a set of candidate words (315);
a character handwriting recognition component (330) for recognizing handwritten character candidates, wherein a character is one out of a letter, a digit and a punctuation;
a candidate word filtering component (350) for filtering the set of candidate words (315) received from the text prediction component (310) based on the output of the character handwriting recognition component (330) ;
a word presentation component (360) for presenting the filtered set of candidate words (355) to a user of the device (300); and
a word selection component (380) for receiving a user selection of a presented candidate word from the user; wherein the character handwriting recognition component (330) is configured for:
determining, via a trained neural network, a plurality of character candidates (335) for a particular handwriting input of one character, the plurality of character candidates being determined based upon handwriting input received from a touch sensitive input field (340); and
outputting the top N character candidates out of the plurality of character candidates (335) as determined by the neural network, with N being equal to or greater than 2, wherein an output vector of the neural network comprises for at least one given character more than one position, each position corresponding to a different visual form of the character.

2. Text input device (300) of claim 1, wherein the text prediction component (310) outputs a ranked list of input candidate words having respective scores, and wherein the word presentation component (360) presents, on a display device (370), at least one candidate word from the filtered list of candidate words (355) in accordance with its respective score.

3. Text input device (300) of claim 1, wherein the character handwriting recognition component (330) comprises handwriting input data processing means for receiving a sequence of 2-dimensional input data from the touch sensitive input field (340) and arranging the input data in a one-dimensional input layer of the neural network.

4. Text input device (300) of any previous claim, wherein the character handwriting recognition component (330) comprises character timer means for determining a character time-out, the character handwriting recognition component (330) determining the end of handwriting input data associated with a character based on a character time-out indication from the character timer means.

5. Text Input device (300) of any previous claim, wherein the character handwriting recognition component (330) comprises a teach component that determines a correct character corresponding to the handwriting input based on the word selected by the user and teaches the neural network to indicate the correct character as the of least one character candidate generated for the handwriting input.

6. Text input device (300) of any previous claim, wherein the word prediction component (310) receives a word selection from the word selection component (380), updates the input text context (320) in response to the selected word, and predicts a new list of input candidate words for the updated input text context.

7. Text input device (300) of any previous claim, wherein the word prediction component (310) generates follow-up input word candidates for the input text context (320) based upon a word dictionary and at least one of a word bigram, a word trigram, and a word grammar.

8. Text input device (300) of any previous claim, wherein the word presentation component (360) arranges a sub-set of the filtered set of candidate words on a touch screen device such that the distance between the presented candidate words allows the user to select a candidate word by touching its representation on the touch screen device with his finger.

9. Text input device (300) of any previous claim, comprising a touch screen device displaying the user interface of an application program and the presented candidate words transparently on top of each other, the touch sensitive input field (340) receiving the handwriting input being part of the touch screen device.

10. A computer-implemented method for inputting text comprising the steps:
predicting a plurality of follow-up candidate words based on an input text context and outputting a set of candidate words (315);
recognizing handwritten character candidates, wherein a character is one out of a letter, a digit and a punctuation;
filtering the set of candidate words (315) based on the recognized character candidates;
presenting the filtered candidate words (355) to a user; and
receiving a selection of a presented candidate word from the user,
wherein the step of recognizing comprises:
determining, via a trained neural network, a plurality of character candidates (335) for a particular handwriting input of one character, the plurality of character candidates being determined based upon handwriting input received from a touch sensitive input field (340);
outputting the top N character candidates out of the plurality of character candidates (335) as determined by the neural network, with N being equal to or greater than 2, wherein an output vector of the neural network comprises for at least one given character more than one position, each position corresponding to a different visual form of the character.

11. Text input method of claim 10, wherein the recognizing of a plurality of handwritten character candidates step comprises:
presenting the handwriting input data to an input layer of the neural network;
determining activation values of an output layer of the neural network comprising a plurality of units that are assigned to characters; and
determining the plurality of handwritten character candidates (335) based upon the activation values of the output layer units.

12. Text input method of claim 11, wherein the handwriting input data is translated to a reference position to remove an input data offset.

13. Text input method of claims 11 or 12, wherein the handwriting input data is re-scaled to result in a normalized representation of the handwriting input data.

14. Text input method of any claim 11 to 13, wherein the handwriting input data is re-sampled to result in a predetermined number of 2-dimensional input data samples.

15. Text input method of any claim 10 to 14, comprising
applying a character bigram to the handwritten character candidates determined for the present handwriting input data, the character bigram being conditioned on a previously determined character candidate.

16. Text input method of any claim 11 to 15, comprising:
determining the aspect ratio for the handwriting input data; and
determining the plurality of handwritten character candidates under consideration of the aspect ratio.

17. Text input method of any claim 10 to 16, comprising:
determining, based on the selected candidate word, a correct character corresponding to the handwriting input data;
calculating error values of the neural network output layer units;
back-propagating the error values in the neural network to train the network units for the present handwriting input data so as to reduce the error values.

18. Text input method of any claim 11 to 17, wherein the best matching visual form of the at least one character is considered when determining the handwritten character candidate for the present handwriting input data.

19. Text input method of claim 18 when dependent on claim 17, wherein, if the correct character has a plurality of visual forms, the best matching version of the correct character is determined, and the neural network trained so that the value of the output layer unit corresponding to the best matching visual form is increased while the values of other output layer units are decreased.

## Patentansprüche

1. Texteingabevorrichtung (300), die Folgendes umfasst:
eine Textvorhersagekomponente (310) zum Vorhersagen einer Vielzahl von nachfolgenden Wörtern auf Basis eines Textkontextes, wobei die Textvorhersagekomponente (310) einen Satz von Wortkandidaten (315) ausgibt;
eine Handschriftzeichenerkennungskomponente (330) zum Erkennen von handschriftlichen Zeichenkandidaten, wobei ein Zeichen eines von einem Buchstaben, einer Ziffer und einer Zeichensetzung ist;
eine Wortkandidatenfilterkomponente (350) zum Filtern des Satzes von Wortkandidaten (315), die von der Textvorhersagekomponente (310) empfangen werden, auf Basis der Ausgabe der Handschriftzeichenerkennungskomponente (330);
eine Wortpräsentationskomponente (360) zum Präsentieren des gefilterten Satzes von Wortkandidaten (355) für einen Benutzer einer Vorrichtung (300); und
eine Wortauswahlkomponente (380) zum Empfangen einer Benutzerauswahl eines präsentierten Wortkandidaten vom Benutzer, wobei die Handschriftzeichenerkennungskomponente (330) zu Folgendem ausgelegt ist:
Bestimmen einer Vielzahl von Zeichenkandidaten (335) für eine spezielle handschriftliche Eingabe von einem Zeichen via ein trainiertes neuronales Netzwerk, wobei die Vielzahl von Zeichenkandidaten auf Basis einer handschriftlichen Eingabe, die von einem berührungsempfindlichen Eingabefeld (340) empfangen wird, bestimmt wird; und
Ausgeben der oberen N Zeichenkandidaten der Vielzahl von Zeichenkandidaten (335), wie vom neuronalen Netzwerk bestimmt, wobei N größer als oder gleich 2 ist, wobei ein Ausgabevektor des neuronalen Netzwerks für mindestens ein gegebenes Zeichen mehr als eine Position umfasst, wobei jede Position einer anderen visuellen Form des Zeichens entspricht.

2. Texteingabevorrichtung (300) nach Anspruch 1, wobei die Textvorhersagekomponente (310) eine eingestufte Liste von Eingabewortkandidaten mit jeweiligen Bewertungen ausgibt und wobei die Wortpräsentationskomponente (360) mindestens einen Wortkandidaten aus der gefilterten Liste von Wortkandidaten (355) gemäß seiner jeweiligen Bewertung auf einer Anzeigevorrichtung (370) präsentiert.

3. Texteingabevorrichtung (300) nach Anspruch 1, wobei die Handschriftzeichenerkennungskomponente (330) Handschrifteingabedatenverarbeitungsmittel zum Empfangen einer Sequenz von 2-dimensionalen Eingabedaten vom berührungsempfindlichen Eingabefeld (340) und Anordnen der Eingabedaten in einer eindimensionalen Eingabeschicht des neuronalen Netzwerks umfasst.

4. Texteingabevorrichtung (300) nach einem der vorhergehenden Ansprüche, wobei die Handschriftzeichenerkennungskomponente (330) Zeichentimermittel zum Bestimmen einer Zeichenzeitüberschreitung umfasst, wobei die Handschriftzeichenerkennungskomponente (330) das Ende von handschriftlichen Eingabedaten, die mit einem Zeichen verknüpft sind, auf Basis einer Zeichenzeitüberschreitungsanzeige von den Zeichentimermitteln bestimmt.

5. Texteingabevorrichtung (300) nach einem der vorhergehenden Ansprüche, wobei die Handschriftzeichenerkennungskomponente (330) eine Lehrkomponente umfasst, die ein korrektes Zeichen, das der handschriftlichen Eingabe entspricht, auf Basis des Wortes, das vom Benutzer ausgewählt wird, bestimmt und das neuronale Netzwerk lehrt, das korrekte Zeichen als den mindestens einen Zeichenkandidaten, der für die handschriftliche Eingabe erzeugt wurde, anzuzeigen.

6. Texteingabevorrichtung (300) nach einem der vorhergehenden Ansprüche, wobei die Wortvorhersagekomponente (310) eine Wortauswahl von der Wortauswahlkomponente (380) empfängt, den Eingabetextkontext (320) in Reaktion auf das ausgewählte Wort aktualisiert und eine neue Liste von Eingabewortkandidaten für den aktualisierten Eingabetextkontext vorhersagt.

7. Texteingabevorrichtung (300) nach einem der vorhergehenden Ansprüche, wobei die Wortvorhersagekomponente (310) nachfolgende Eingabewortkandidaten für den Eingabetextkontext (320) auf Basis eines Wörterbuchs und von mindestens einem von einem Wortbigramm, einem Worttrigramm und einer Wortgrammatik erzeugt.

8. Texteingabevorrichtung (300) nach einem der vorhergehenden Ansprüche, wobei die Wortpräsentationskomponente (360) einen Untersatz des gefilterten Satzes von Wortkandidaten auf einer Touchscreenvorrichtung derart anordnet, dass der Abstand zwischen den präsentierten Wortkandidaten es dem Benutzer erlaubt, einen Wortkandidaten durch Berühren seiner Repräsentation auf der Touchscreenvorrichtung mit seinem Finger auszuwählen.

9. Texteingabevorrichtung (300) nach einem der vorhergehenden Ansprüche, die eine Touchscreenvorrichtung umfasst, die die Benutzerschnittstelle eines Anwendungsprogramms und die präsentierten Wortkandidaten transparent aufeinander anzeigt, wobei das berührungsempfindliche Eingabefeld (340), das die handschriftliche Eingabe empfängt, Teil der Touchscreenvorrichtung ist.

10. Computerimplementiertes Verfahren zum Eingeben von Text, das die folgenden Schritte umfasst:
Vorhersagen einer Vielzahl von nachfolgenden Wortkandidaten auf Basis eines Eingabetextkontextes und Ausgeben eines Satzes von Wortkandidaten (315);
Erkennen von handschriftlichen Zeichenkandidaten, wobei ein Zeichen eines von einem Buchstaben, einer Ziffer und einer Zeichensetzung ist;
Filtern des Satzes von Wortkandidaten (315) auf Basis der erkannten Zeichenkandidaten;
Präsentieren der gefilterten Wortkandidaten (355) für einen Benutzer; und
Empfangen einer Auswahl eines präsentierten Wortkandidaten vom Benutzer,
wobei der Schritt des Erkennens Folgendes umfasst:
Bestimmen einer Vielzahl von Zeichenkandidaten (335) für eine spezielle handschriftliche Eingabe von einem Zeichen via ein trainiertes neuronales Netzwerk, wobei die Vielzahl von Zeichenkandidaten auf Basis einer handschriftlichen Eingabe, die von einem berührungsempfindlichen Eingabefeld (340) empfangen wird, bestimmt wird;
Ausgeben der oberen N Zeichenkandidaten der Vielzahl von Zeichenkandidaten (335), wie vom neuronalen Netzwerk bestimmt, wobei N größer als oder gleich 2 ist, wobei ein Ausgabevektor des neuronalen Netzwerks für mindestens ein gegebenes Zeichen mehr als eine Position umfasst, wobei jede Position einer anderen visuellen Form des Zeichens entspricht.

11. Texteingabeverfahren nach Anspruch 10, wobei der Schritt des Erkennens einer Vielzahl von handschriftlichen Zeichenkandidaten Folgendes umfasst:
Präsentieren der handschriftlichen Eingabedaten für eine Eingabeschicht des neuronalen Netzwerks;
Bestimmen von Aktivierungswerten einer Ausgabeschicht des neuronalen Netzwerks, die eine Vielzahl von Einheiten, die Zeichen zugewiesen sind, umfasst; und
Bestimmen der Vielzahl von handschriftlichen Zeichenkandidaten (335) auf Basis der Aktivierungswerte der Ausgabeschichteinheiten.

12. Texteingabeverfahren nach Anspruch 11, wobei die handschriftlichen Eingabedaten zum Entfernen eines Eingabedatenversatzes in eine Referenzposition umgesetzt werden.

13. Texteingabeverfahren nach Anspruch 11 oder 12, wobei die handschriftlichen Eingabedaten neu skaliert werden, um in einer normalisierten Repräsentation der handschriftlichen Eingabedaten zu resultieren.

14. Texteingabeverfahren nach einem der Ansprüche 11 bis 13, wobei die handschriftlichen Eingabedaten neu abgetastet werden, um in einer vorbestimmten Anzahl von 2-dimensionalen Eingabedatenabtastwerten zu resultieren.

15. Texteingabeverfahren nach einem der Ansprüche 10 bis 14, das Folgendes umfasst
Anwenden eines Zeichenbigramms auf die handschriftlichen Zeichenkandidaten, die für die vorliegenden handschriftlichen Eingabedaten bestimmt wurden, wobei das Zeichenbigramm von einem zuvor bestimmten Zeichenkandidaten abhängig ist.

16. Texteingabeverfahren nach einem der Ansprüche 11 bis 15, das Folgendes umfasst:
Bestimmen des Aspektverhältnisses für die handschriftlichen Eingabedaten; und
Bestimmen der Vielzahl von handschriftlichen Zeichenkandidaten unter Berücksichtigung des Aspektverhältnisses.

17. Texteingabeverfahren nach einem der Ansprüche 10 bis 16, das Folgendes umfasst:
Bestimmen eines korrekten Zeichens, das den handschriftlichen Eingabedaten entspricht, auf Basis des ausgewählten Wortkandidaten;
Berechnen von Fehlerwerten der Ausgabeschichteinheiten des neuronalen Netzwerks;
rückwärtiges Ausbreiten der Fehlerwerte im neuronalen Netzwerk, um die Netzwerkeinheiten für die vorliegenden handschriftlichen Eingabedaten zu trainieren, um die Fehlerwerte zu reduzieren.

18. Texteingabeverfahren nach einem der Ansprüche 11 bis 17, wobei die am besten passende visuelle Form des mindestens einen Zeichens berücksichtigt wird, wenn der handschriftliche Zeichenkandidat für die vorliegenden handschriftlichen Eingabedaten bestimmt wird.

19. Texteingabeverfahren nach Anspruch 18, sofern von Anspruch 17 abhängig, wobei, wenn das korrekte Zeichen eine Vielzahl von visuellen Formen aufweist, die am besten passende Version des korrekten Zeichens bestimmt wird und das neuronale Netzwerk derart trainiert wird, dass der Wert der Ausgabeschichteinheit, der der am besten passenden visuellen Form entspricht, erhöht wird, während die Werte von anderen Ausgabeschichteinheiten verringert werden.

## Revendications

1. Dispositif de saisie de texte (300) comprenant :
un composant de prédiction de texte (310) pour prédire une pluralité de mots à suivre sur la base d'un contexte de texte, le composant de prédiction de texte (310) délivrant en sortie un ensemble de mots candidats (315) ;
un composant de reconnaissance d'écriture manuscrite de caractères (330) pour reconnaître des caractères manuscrits candidats, dans lequel un caractère est l'un parmi une lettre, un chiffre et une ponctuation ;
un composant de filtrage de mots candidats (350) pour filtrer l'ensemble de mots candidats (315) reçus à partir du composant de prédiction de texte (310) sur la base de la sortie du composant de reconnaissance d'écriture manuscrite de caractères (330) ;
un composant de présentation de mots (360) pour présenter l'ensemble filtré de mots candidats (355) à un utilisateur du dispositif (300) ; et
un composant de sélection de mots (380) pour recevoir une sélection d'utilisateur d'un mot candidat présenté provenant de l'utilisateur ; dans lequel le composant de reconnaissance d'écriture manuscrite de caractères (330) est configuré pour :
déterminer, via un réseau neuronal entraîné, une pluralité de caractères candidats (335) pour une saisie manuscrite particulière d'un caractère, la pluralité de caractères candidats étant déterminée sur la base d'une saisie manuscrite reçue à partir d'un champ de saisie tactile (340) ; et
délivrer en sortie les N meilleurs caractères candidats parmi la pluralité de caractères candidats (335) tels que déterminés par le réseau neuronal, N étant égal ou supérieur à 2, dans lequel un vecteur de sortie du réseau neuronal comprend, pour au moins un caractère donné, plus d'une position, chaque position correspondant à une forme visuelle différente du caractère.

2. Dispositif de saisie de texte (300) selon la revendication 1, dans lequel le composant de prédiction de texte (310) délivre en sortie une liste classée de mots candidats saisis ayant des scores respectifs, et dans lequel le composant de présentation de mots (360) présente, sur un dispositif d'affichage (370), au moins un mot candidat provenant de la liste filtrée de mots candidats (355) conformément à son score respectif.

3. Dispositif de saisie de texte (300) selon la revendication 1, dans lequel le composant de reconnaissance d'écriture manuscrite de caractères (330) comprend des moyens de traitement de données de saisie manuscrite pour recevoir une séquence de données de saisie à 2 dimensions provenant du champ de saisie tactile (340) et agencer les données de saisie dans une couche d'entrée à une dimension du réseau neuronal.

4. Dispositif de saisie de texte (300) selon une quelconque revendication précédente, dans lequel le composant de reconnaissance d'écriture manuscrite de caractères (330) comprend des moyens de minuterie de caractère pour déterminer une expiration de caractère, le composant de reconnaissance d'écriture manuscrite de caractères (330) déterminant la fin de données de saisie manuscrite associées à un caractère sur la base d'une indication d'expiration de caractère provenant des moyens de minuterie de caractère.

5. Dispositif de saisie de texte (300) selon une quelconque revendication précédente, dans lequel le composant de reconnaissance d'écriture manuscrite de caractères (330) comprend un composant d'enseignement qui détermine un caractère correct correspondant à la saisie manuscrite sur la base du mot sélectionné par l'utilisateur et enseigne au réseau neuronal d'indiquer le caractère correct comme le au moins un caractère candidat généré pour la saisie manuscrite.

6. Dispositif de saisie de texte (300) selon une quelconque revendication précédente, dans lequel le composant de prédiction de mots (310) reçoit une sélection de mot provenant du composant de sélection de mot (380), met à jour le contexte de texte de saisie (320) en réponse au mot sélectionné, et prédit une nouvelle liste de mots candidats de saisie pour le contexte de texte de saisie mis à jour.

7. Dispositif de saisie de texte (300) selon une quelconque revendication précédente, dans lequel le composant de prédiction de mots (310) génère des mots de saisie à suivre candidats pour le contexte de texte de saisie (320) sur la base d'un dictionnaire de mots et d'au moins l'un parmi un digramme de mots, un trigramme de mots et une grammaire de mots.

8. Dispositif de saisie de texte (300) selon une quelconque revendication précédente, dans lequel le composant de présentation de mots (360) agence un sous-ensemble de l'ensemble filtré de mots candidats sur un dispositif à écran tactile de sorte que la distance entre les mots candidats présentés permette à l'utilisateur de sélectionner un mot candidat en touchant sa représentation sur le dispositif à écran tactile avec son doigt.

9. Dispositif de saisie de texte (300) selon une quelconque revendication précédente, comprenant un dispositif à écran tactile affichant l'interface utilisateur d'un programme d'application et les mots candidats présentés de manière transparente l'un au-dessus de l'autre, le champ de saisie tactile (340) recevant la saisie manuscrite faisant partie du dispositif à écran tactile.

10. Procédé mis en œuvre par ordinateur pour la saisie de texte comprenant les étapes suivantes :
la prédiction d'une pluralité de mots à suivre candidats sur la base d'un contexte de texte de saisie et la sortie d'un ensemble de mots candidats (315) ;
la reconnaissance de caractères manuscrits candidats, dans lequel un caractère est l'un parmi une lettre, un chiffre et une ponctuation ;
le filtrage de l'ensemble de mots candidats (315) sur la base des caractères candidats reconnus ;
la présentation des mots candidats filtrés (355) à un utilisateur ; et
la réception d'une sélection d'un mot candidat présenté provenant de l'utilisateur,
dans lequel l'étape de reconnaissance comprend :
la détermination, via un réseau neuronal entraîné, d'une pluralité de caractères candidats (335) pour une saisie manuscrite particulière d'un caractère, la pluralité de caractères candidats étant déterminée sur la base d'une saisie manuscrite reçue à partir d'un champ de saisie tactile (340) ;
la sortie des N meilleurs caractères candidats parmi la pluralité de caractères candidats (335) tels que déterminés par le réseau neuronal, N étant égal ou supérieur à 2, dans lequel un vecteur de sortie du réseau neuronal comprend, pour au moins un caractère donné, plus d'une position, chaque position correspondant à une forme visuelle différente du caractère.

11. Procédé de saisie de texte selon la revendication 10, dans lequel l'étape de reconnaissance d'une pluralité de caractères manuscrits candidats comprend :
la présentation des données de saisie manuscrite à une couche d'entrée du réseau neuronal ;
la détermination de valeurs d'activation d'une couche de sortie du réseau neuronal comprenant une pluralité d'unités qui sont attribuées à des caractères ; et
la détermination de la pluralité de caractères manuscrits candidats (335) sur la base des valeurs d'activation des unités de couche de sortie.

12. Procédé de saisie de texte selon la revendication 11, dans lequel les données de saisie manuscrite sont traduites en une position de référence pour éliminer un décalage de données de saisie.

13. Procédé de saisie de texte selon les revendications 11 ou 12, dans lequel les données de saisie manuscrite sont à nouveau mises à l'échelle pour résulter en une représentation normalisée des données de saisie manuscrite.

14. Procédé de saisie de texte selon l'une quelconque des revendications 11 à 13, dans lequel les données de saisie manuscrite sont à nouveau échantillonnées pour résulter en un nombre prédéterminé d'échantillons de données de saisie à 2 dimensions.

15. Procédé de saisie de texte selon l'une quelconque des revendications 10 à 14, comprenant
l'application d'un diagramme de caractères sur les caractères manuscrits candidats déterminés pour les présentes données de saisie manuscrite, le digramme de caractères étant conditionné sur un caractère candidat précédemment déterminé.

16. Procédé de saisie de texte selon l'une quelconque des revendications 11 à 15, comprenant :
la détermination du facteur de forme pour les données de saisie manuscrite ; et
la détermination de la pluralité de caractères manuscrits candidats en tenant compte du facteur de forme.

17. Procédé de saisie de texte selon l'une quelconque des revendications 10 à 16, comprenant :
la détermination, sur la base du mot candidat sélectionné, d'un caractère correct correspondant aux données de saisie manuscrite ;
le calcul de valeurs d'erreur des unités de couche de sortie de réseau neuronal ;
la rétropropagation des valeurs d'erreur dans le réseau neuronal pour entraîner les unités de réseau pour les présentes données de saisie manuscrite de façon à réduire les valeurs d'erreur.

18. Procédé de saisie de texte selon l'une quelconque des revendications 11 à 17, dans lequel la forme visuelle concordant le mieux du au moins un caractère est prise en compte lors de la détermination du caractère manuscrit candidat pour les présentes données de saisie manuscrite.

19. Procédé de saisie de texte selon la revendication 18 lorsque prise en dépendance de la revendication 17, dans lequel, si le caractère correct possède une pluralité de formes visuelles, la version concordant le mieux du caractère correct est déterminée, et le réseau neuronal est entraîné de sorte que la valeur de l'unité de couche de sortie correspondant à la forme visuelle concordant le mieux soit augmentée tandis que les valeurs d'autres unités de couche de sortie sont diminuées.
